# EUROPÄISCHE PATENTSCHRIFT

(11) **EP 0 985 580 B1**
(45) Veröffentlichungstag und Bekanntmachung des Hinweises auf die Patenterteilung: **19.01.2005**
(21) Anmeldenummer: 99112380.3
(22) Anmeldetag: 29.06.1999
(51) Int. Cl.: B60R 5/00

(54) **Transportvorrichtung, z.B. für Personen- und Kombinationskraftwagen**
Transporting device e.g. for passenger and estate cars
Dispositif de transport p.e. pour voitures particulières ou breaks

(30) Priorität: 07.09.1998 DE 19840503
(43) Veröffentlichungstag der Anmeldung: 15.03.2000
(73) Patentinhaber: BOS GmbH & Co. KG, 73760 Ostfildern (DE)
(72) Erfinder: Sitzler, Wolfgang, 42111 Wuppertal (DE); Ledüc, Peter, 40468 Düsseldorf (DE)
(74) Vertreter: Patentanwälte Ostriga, Sonnet, Wirths & Roche

(56) Entgegenhaltungen:
- DE-A- 4 102 646
- DE-C- 19 637 029
- DE-U- 29 803 305

## Beschreibung

Die Erfindung betrifft eine Transportvorrichtung entsprechend dem Oberbegriff des Anspruchs 1.

Eine solche Transportvorrichtung, die in der DE 195 19 507 C2 beschrieben ist, weist ein Rahmengehäuse auf, dessen Rahmen-Laibung einen Behälter-Stauraum umrandet. Beide im Parallelabstand voneinander angeordneten Hauptflächen bzw. Breitflächen des Rahmenquerschnitts sind mittels je eines Deckels leicht lösbar zu verschließen. Der zwischen der Rahmen-Laibung und den beiden aufeinander zu weisenden Deckelinnenflächen gebildete Stauraum dient der Aufnahme eines zu einem Behälter-Stauvolumen verkleinerbaren, zusammenlegbaren sackartigen Behälters für vornehmlich langgestrecktes Ladegut, wie z.B. für Skier.

Der Öffnungsrand des sackartigen Behälters ist zur Bildung einer Ladeöffnung üblicher Weise mittels eines Klemmrahmens oder anderweitig in der Rahmenlaibung insbesondere lösbar gehalten.

Bei der gattungsgemäßen Transportvorrichtung entsprechend der DE 195 19 507 C2 ist das Rahmengehäuse beispielsweise in einer sitzlehnenseitigen Halterung eines Fondsitzes aufgenommen. Auf diese Weise kann nach Öffnung des in Fahrtrichtung vorderen Deckels der sackartige Behälter nach vorn ausgebreitet werden. Sodann kann nach Öffnung des zum Kofferraum weisenden Deckels vom Kofferraum her eine Beladung des Behälters, z.B. mit Skiern, erfolgen.

Die fahrzeugseitige Halterung eines rahmenartigen Gehäuses gemäß der DE 195 19 507 C2 kann unterschiedlich ausgebildet sein und beispielsweise auch in Abwandlung der in dem DE-U 29 61 58 13 gezeigten Anordnung erfolgen.

Ausgehend von der Transportvorrichtung gemäß der DE 195 19 507 C2, liegt der Erfindung die Aufgabe zugrunde, die bekannte Transportvorrichtung so weiterzuentwickeln, daß diese außerdem zusätzliche Funktionen übernehmen kann.

In Verbindung mit den Merkmalen des Oberbegriffs des Anspruchs 1 wird diese Aufgabe entsprechend der Erfindung dadurch gelöst, daß das Rahmengehäuse zumindest auf der einen Seite seiner fahrzeugseitigen Halterung mit einem Zusatzgehäuse versehen ist, welches an die Öffnungsfläche des Rahmengehäuses angeschlossen ist und welches zugleich den Deckel bildet oder die Funktion des Deckels übernimmt.

Im Unterschied beispielsweise zu einer Transportbehälter-Einrichtung gemäß der DE 197 27 499 C1, gemäß welcher in einer rahmenförmigen Wechselkassette alternativ z.B. nur der etwa kederartige Halte- bzw. Klemmrahmen für einen Skisack oder der Halterahmen für einen starren gehäuseartigen Behälter eingerastet werden kann, setzt die vorliegende Erfindung nach wie vor ein bestimmtes Rahmengehäuse voraus. Dieses bestimmte Rahmengehäuse bildet einen Behälter-Stauraum für einen verkleinerbaren, z.B. sackartigen Behälter. Zugleich weist das Rahmengehäuse Mittel auf, die eine einseitige und endseitige Halterung des zusammenlegbaren Behälters innerhalb des Rahmengehäuses gestatten. Im Unterschied zum Stand der Technik ist indessen entsprechend der Erfindung an zumindest einer Seite der fahrzeugseitigen Halterung des Rahmengehäuses an eine Öffnungsfläche des Rahmengehäuses ein Zusatzgehäuse angeschlossen.

Dieses Zusatzgehäuse kann entsprechend einer ersten Variante den Deckel bilden, welcher der öffnungsfläche des Rahmengehäuses zugeordnet ist.

Nach einer zweiten Variante kann das Zusatzgehäuse, ohne einen eigentlichen Deckel auszubilden, die Funktion des Deckels übernehmen.

Entsprechend der ersten Variante kann der zusammenlegbare Behälter zunächst durch den Zusatzgehäuse-Innenraum hindurch und, daran anschließend, durch eine vom äußeren Deckel des Zusatzgehäuses freigegebene Öffnung hindurch ausgebreitet und der ausgebreitete Behälter anschließend beladen werden.

Entsprechend der zweiten Variante kann die dem Zusatzgehäuse benachbarte Öffnungsfläche des Rahmengehäuses durch Entfernung des Zusatzgehäuses selbst freigegeben werden, um ein Ausbreiten des zusammengelegten Behälters und danach dessen Beladung zu gestatten.

Sowohl gemäß der ersten Variante als auch entsprechend der zweiten Variante wird durch das Zusatzgehäuse ein Zusatzgehäuse-Innenraum bereitgestellt, welcher zusätzliche Nutzungsmöglichkeiten gestattet, auch wenn sich der zusammengelegte Behälter im Behälter-Stauraum des Rahmengehäuses befindet.

So kann beispielsweise ein Kabriolett mit einer erfindungsgemäßen Transportvorrichtung ausgerüstet sein, bei welcher das Zusatzgehäuse für Kleinutensilien od. dgl. einen zusätzlichen verschließbaren Stauraum schafft, dessen Innenraum bei aufgeklapptem Dach nicht ohne weiteres zugänglich ist. In einem solchen Fall ist zudem die Möglichkeit gegeben, z.B. den Skisack aus dem Rahmengehäuse zu entfernen, um den Zusatzgehäuse-Innenraum um den Behälter-Stauraum zu vergrößern.

Andererseits wäre es nach der vorbeschriebenen zweiten Variante ebenfalls denkbar, das Zusatzgehäuse als Kühlraum, so z.B. als elektrisch betriebene Kühlbox, auszubilden. Diese könnte für den Fall, daß der Skisack beladen werden soll, vom Rahmengehäuse entfernt werden, welches ansonsten der Kühlbox als Anbauhalterung dient. Es ist auch denkbar, das Zusatzgehäuse z.B. als Aufnahme- bzw. Montageraum für Telekommunikationsmittel jeglicher Art zu nutzen.

In Verbindung mit vorgenannten Anwendungsbeispielen ist demnach eine erfindungsgemäße Ausgestaltung dadurch gekennzeichnet, daß sich der Zusatzgehäuse-Innenraum an den Behälter-Stauraum des Rahmengehäuses anschließt.

Dabei bildet in weiterer Ausgestaltung der Erfindung das Zusatzgehäuse im Abstand von der Öffnungsfläche des Rahmengehäuses den Deckel. Letztgenannte Ausführungsform (z.B. zur Verwirklichung der ersten Variante) ist zweckmäßig, wenn der zusammengelegte Behälter durch den Zusatzgehäuse-Innenraum hindurch und sodann durch eine vom geöffneten Deckel freigegebene Öffnung des Zusatzbehälters hindurch ausgebreitet werden soll.

Das Zusatzgehäuse stellt zweckmäßig ein starres Gebilde dar.

Vorteilhaft für eine einfach Montageweise ist es auch, daß das Zusatzgehäuse, mit dem Rahmengehäuse eine Baueinheit bildend, am Rahmengehäuse befestigt ist.

Außerdem gestattet es die Erfindung, daß das Zusatzgehäuse am Rahmengehäuse lösbar befestigt ist, was z.B. der Verwirklichung der zweiten Variante dient.

Andererseits kann in weiterer Ausgestaltung der Erfindung die Baueinheit von Rahmengehäuse und Zusatzgehäuse so ausgestaltet sein, daß das Zusatzgehäuse am Rahmengehäuse stoffschlüssig befestigt ist. Konkret bietet sich an, Zusatzgehäuse und Rahmengehäuse zusammenhängend als Kunststoffspritzgußteil auszubilden.

Eine Bestückung des Zusatzgehäuse-Innenraums, beispielsweise mit Kleinutensilien od. dgl., wird gegebenenfalls dann erleichtert, wenn der Behälter-Stauraum und der Zusatzgehäuse-Innenraum mittels eines lösbar gehaltenen ein- oder mehrteiligen Trennelements, welches z.B. deckelartig wegschwenkbar oder z.B. herausnehmbar ausgebildet sein kann, voneinander abtrennbar sind.

Für Kabrioletts, deren fahrzeugseitige Befestigungsebene für das Rahmengehäuse von einer nicht zu öffnenden Karosseriewand, z.B. von der Spritzwand einer Mittelmotor-Anordnung, gebildet ist, kann es zweckmäßig sein, daß das Rahmengehäuse etwa im Parallelabstand von der Ebene einer Öffnungsfläche an der dem Zusatzgehäuse abgewandten Seite eine fest angeschlossene Wand bildet. Das Rahmengehäuse könnte in diesem Falle mit seiner Wand im Fahrgastraum außen an der Spritzwand des Motorraums einer Mittelmotor-Anordnung befestigt werden.

Da das Rahmengehäuse im vorbeschriebenen Falle selbst keine Durchladeöffnung bilden kann, ist ein zusammenlegbarer Behälter anwendbar, der beispielsweise in der DE 34 47 323 C2 beschrieben und mit einer sich in Längsrichtung des ausgebreiteten Behälters erstreckenden, verschließbaren Öffnung in Form eines Längsschlitzes versehen ist.

Eine z.B. für geöffnete Kabrioletts vorteilhafte Ausgestaltung der Erfindung besteht darin, daß der vom Zusatzgehäuse gebildete Deckel mit einem Schloß versehen ist.

Das Rahmengehäuse selbst kann mit seiner fahrzeugseitigen Halterung verschraubt oder auch an letzterer leicht lösbar befestigt sein. Im Falle einer leicht lösbaren Befestigung bietet sich beispielsweise eine Anordnung gemäß der DE 197 27 499 C1 an. Dabei könnte das Rahmengehäuse zu seiner formschlüssigen lösbaren Befestigung mit einem etwa flanschartigen Halterand versehen sein.

In den Zeichnungen ist ein bevorzugtes Ausführungsbeispiel entsprechend der Erfindung dargestellt, es zeigt
Fig. 1 einen Vertikalschnitt durch eine Transportvorrichtung und
Fig. 2 einen Schnitt entsprechend der in Fig. 1 eingetragenen abgeknickten Schnittlinie II-II.

Eine insgesamt mit 10 bezeichnete Transportvorrichtung weist einen Rahmengehäuse 11 und ein Zusatzgehäuse 12 auf.

Das Rahmengehäuse 11 weist eine in Fahrzeug-Fahrtrichtung x nach vorn weisende öffnungsfläche 13 und eine entgegen der Fahrtrichtung x nach hinten weisende rückwärtige Öffnungsfläche 14 (Hauptfläche) auf.

Die vordere Öffnungsfläche 13 (Hauptfläche), deren Ebene mit E bezeichnet ist, ist mittels eines Trenndeckels 15 lösbar zu verschließen. Der Trenndeckel 15 aus eigenelastischem Werkstoff (z.B. aus Kunststoff) weist Federrastarme bzw. Federrastbereiche 16 auf, deren Rastvorsprünge 17 in korrespondierende Rastlöcher im Rahmen 19 des Rahmengehäuses 11 eingreifen.

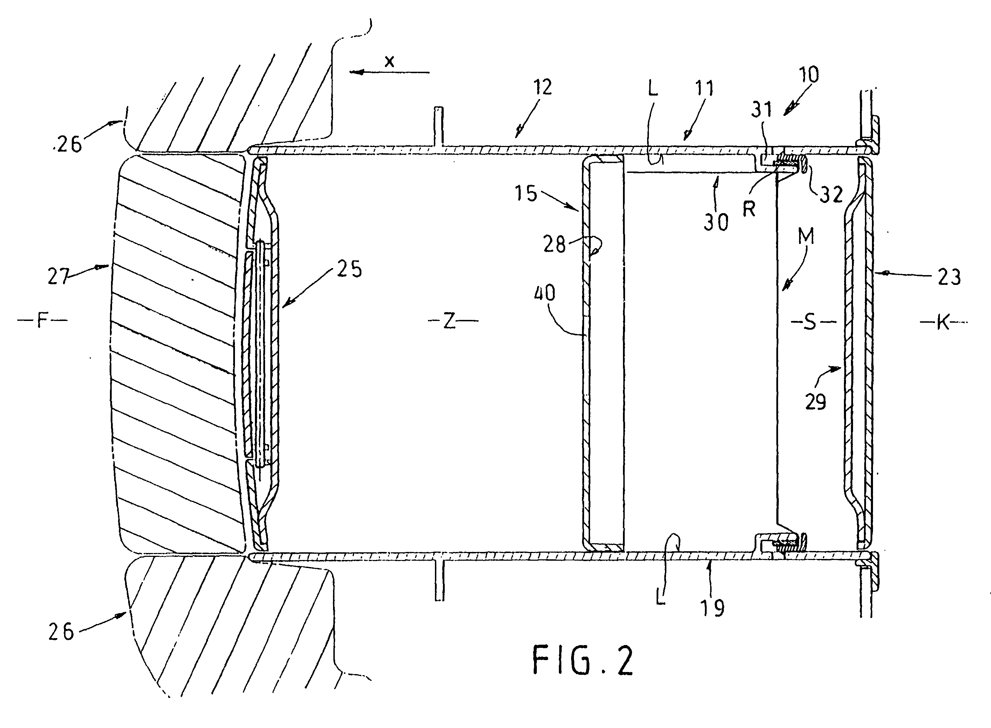

Zur Betätigung des Trenndeckels 15 kann dieser mittels einer Fingerdurchgriffsöffnung 40 (s. Fig. 2) versehen sein, die es gestattet, den Deckel 15 durch elastisches Verbiegen entweder aus seiner Schließrastlage zu entfernen oder in letztere hineinzuversetzen.

Das Zusatzgehäuse 12, welches größere Abmessungen als das Rahmengehäuse 11 aufweist und gegenüber letzterem stufenförmig erweitert ist, bildet eine entgegen der Fahrtrichtung x nach hinten weisende rückwärtige öffnungsfläche 20, die eine rechteckige Kontur aufweist und die mit der ebenfalls rechteckig konturierten vorderen Öffnungsfläche 13 des Rahmengehäuses 11 koinzidiert.

Die rückwärtige Öffnungsfläche 14 des Rahmengehäuses 11 ist mittels eines Klappdeckels 23 verschlossen. Dazu ist eine Riegelverschluß-Anordnung 21 vorgesehen. Der Klappdeckel 23 ist um eine untere Schwenkachse 22 in seine Öffnungslage versetzbar.

Rein schematisch ist vorstellbar, daß sich rechts von der Ebene E der Kofferraum K und links von der Ebene E der Fahrgastraum F befinden.

Das Zusatzgehäuse 12 weist außerdem eine in Fahrtrichtung x nach vorn weisende Öffnungsfläche 24 auf, welche mittels eines vorderen Klappdeckels 25 verschlossen ist. Die hauptsächliche Erstreckungsebene des vorderen Klappdeckels 25 und die Ebene C der Öffnungsfläche 24 sind, von unten nach oben betrachtet, von der Fahrtrichtung x und der Senkrechten weg geneigt. Dabei entspricht die Neigung beim gezeigten Ausführungsbeispiel etwa der Neigung einer Sitzlehne 26, die aus Fig. 2 ersichtlich ist. Auf diese Weise kann der vordere Klappdeckel 25 in die Sitzlehne 26 eines Fondsitzes integriert und z.B. mittels eines abnehmbaren Polsterkörpers 27 verdeckt werden.

Zwischen den Innenflächen 28, 29 des Trenndeckels 15 und des rückwärtigen Klappdeckels 23 sowie der umlaufenden Laibung L des Rahmens 19 ist ein Stauraum S zur Aufnahme eines bis auf sein Stauvolumen reduzierten (zusammengefalteten) textilen Behältersacks 30 (Skisack) gebildet.

Der Behältersack 30 ist im Bereich seiner Mündung M mit seinem Randbereich R in eine entgegen der Fahrtrichtung x offene rahmenseitige umlaufende Nut 31 eingeschoben und dort mittels eines kederartigen umlaufenden Klemmrahmens 32 lösbar und herausnehmbar festgelegt.

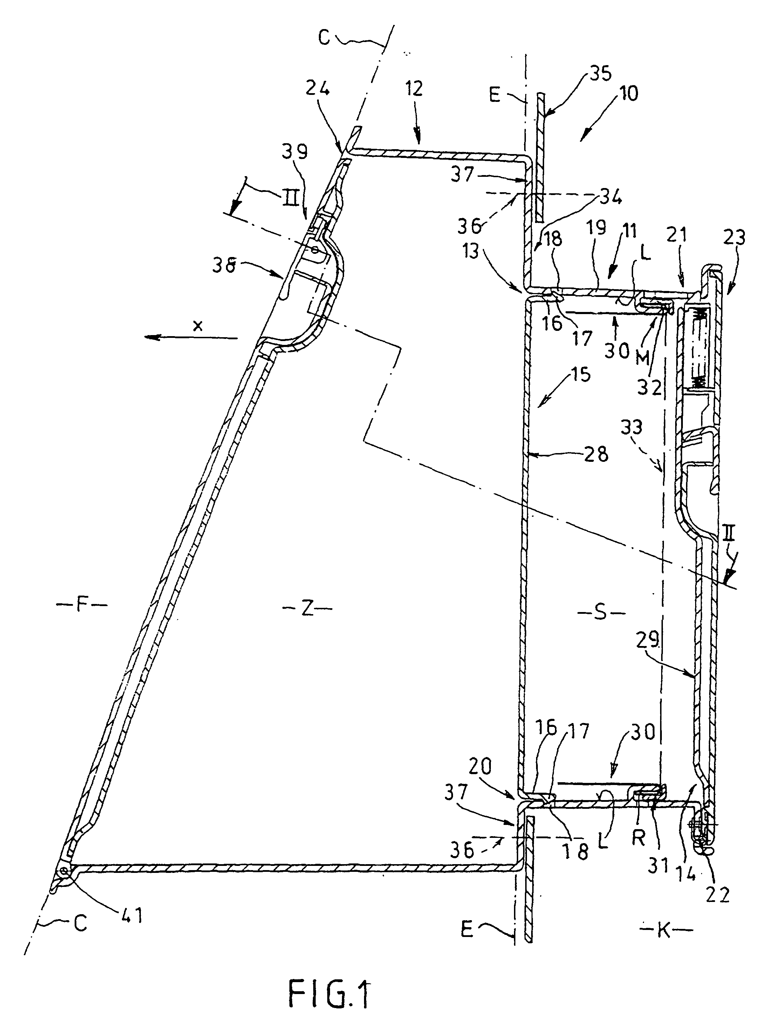

In Fig. 1 ist der Behältersack 30 nur teilweise in seiner gestreckten ausgebreiteten Lage dargestellt. Dabei ist die Ebene der Ladeöffnung 33 mit einer gestrichelten Linie gekennzeichnet.

Das Zusatzgehäuse 12 bildet einen Zusatzgehäuse-Innenraum Z.

Zur Montage der Transportvorrichtung 10 wird diese mit ihrem Rahmengehäuse 11 voran entgegen der Fahrtrichtung x durch eine Montageöffnung 34 in der Kofferraum-Trennwand 35 hindurchgesteckt und die senkrechte Rückwand 37 des Zusatzgehäuses 12 an den mit 36 bezeichneten Stellen mit der Kofferraum-Trennwand 35 verschraubt.

Die Funktion der Transportvorrichtung 10 ist folgende: Wenn der Behältersack (Skisack) 30 in Betrieb genommen werden soll, wird zunächst der rückwärtige Klappdeckel 23 vom Kofferraum K her geöffnet. Sodann öffnet man nach Schlüsselbetätigung eines Schließzylinders 39 den Verschluß 38 und schwenkt dabei den vorderen Klappdeckel 25 in Fahrtrichtung x um seine untere Schwenkachse 41 in seine öffnungslage. Zuvor wurde die äußere Ansichtsfläche des vorderen Klappdeckels 25 durch Entfernen des Polsterkörpers 27 freigelegt.

Unter Zuhilfenahme der Fingerdurchgriffsöffnung 40 kann sodann der Trenndeckel 15 elastisch verbogen und aus seiner Raststellung heraus nach außen entfernt werden. Dadurch ist die Möglichkeit gegeben, den Behältersack 30 durch den Zusatzgehäuse-Innenraum Z und durch die vordere Öffnungsfläche 24 des Zusatzgehäuses 12 nach vorn in Fahrtrichtung x in den Fahrgastraum F hinein auszubreiten, worauf in an sich bekannter Weise die Beladung des Behältersacks 30 mit langgestrecktem Ladegut (z.B. Skier) erfolgen kann.

Falls der Behältersack 30 nicht benötigt wird und sich zusammengefaltet im Stauraum S befindet und letzterer durch die Deckel 28, 29 verschlossen ist, kann der Zusatzgehäuse-Innenraum Z zur Aufnahme von Utensilien verwendet werden. Der Zusatzgehäuse-Innenraum Z kann (beispielsweise im Sommer) nach Herausnahme des Trenndeckels 15 und des Behältersacks 30 um den Stauraum S vergrößert werden.

Die beiden Grundkörper von Rahmengehäuse 11 und Zusatzgehäuse 12 bilden ein stoffschlüssig zusammenhängendes einheitliches Kunststoff-Spritzgußteil.

## Patentansprüche

1. Transportvorrichtung (10), wie z.B. für Personen- oder Kombinationskraftwagen, mit einem in einer fahrzeugseitigen Halterung (34, 35) angeordneten Rahmengehäuse (11), welches einen Behälter-Stauraum (S) für einen zu einem Behälter-Stauvolumen verkleinerbaren, zusammenlegbaren, innerhalb des Rahmengehäuses (11) festlegbaren, insbesondere sackartigen Behälters (30) für vornehmlich langgestrecktes Ladegut, wie z.B. für Skier, bildet, wobei mindestens einer sich zur Haupterstreckungsebene des Rahmengehäuses (11) etwa parallelen Öffnungsfläche (13) des Rahmengehäuses (11) ein Deckel (25) zugeordnet ist, **dadurch gekennzeichnet, daß** das Rahmengehäuse (11) zumindest auf der einen Seite (bei F) seiner fahrzeugseitigen Halterung (34, 35) mit einem Zusatzgehäuse (12) versehen ist, welches an die öffnungsfläche (13) des Rahmengehäuses (11) angeschlossen ist und welches zugleich den Deckel (25) bildet oder die Funktion des Deckels übernimmt.

2. Transportvorrichtung nach Anspruch 1, **dadurch gekennzeichnet, daß** sich der Zusatzgehäuse-Innenraum (Z) an den Behälter-Stauraum (S) des Rahmengehäuses (11) anschließt.

3. Transportvorrichtung nach Anspruch 1 oder nach Anspruch 2, **dadurch gekennzeichnet, daß** das Zusatzgehäuse (12) im Abstand von der Ebene (E) der benachbarten Öffnungsfläche (13) des Rahmengehäuses (12) den Deckel (25) bildet.

4. Transportvorrichtung nach einem der Ansprüche 1 bis 3, **dadurch gekennzeichnet, daß** das Zusatzgehäuse (12), mit dem Rahmengehäuse (11) eine Baueinheit bildend, am Rahmengehäuse (11) befestigt ist.

5. Transportvorrichtung nach einem der Ansprüche 1 bis 4, **dadurch gekennzeichnet, daß** das Zusatzgehäuse (12) am Rahmengehäuse (11) lösbar befestigt ist.

6. Transportvorrichtung nach einem der Ansprüche 1 bis 4, **dadurch gekennzeichnet, daß** das Zusatzgehäuse (12) am Rahmengehäuse (11) stoffschlüssig befestigt ist.

7. Transportvorrichtung nach einem der Ansprüche 1 bis 6, **dadurch gekennzeichnet, daß** der Behälter-Stauraum (S) und der Zusatzgehäuse-Innenraum (Z) mittels eines lösbar gehaltenen ein- oder mehrteiligen Trennelements (15) voneinander abtrennbar sind.

8. Transportvorrichtung nach einem der Ansprüche 1 bis 7, **dadurch gekennzeichnet, daß** das Rahmengehäuse (11) etwa im Parallelabstand von der Ebene (E) einer Öffnungsfläche (13) an seiner dem Zusatzgehäuse (12) abgewandten Seite eine fest angeschlossene Wand bildet.

9. Transportvorrichtung nach einem der Ansprüche 1 bis 8, **dadurch gekennzeichnet, daß** der vom Zusatzgehäuse (12) gebildete Deckel (25) mit einem Schloß (39) versehen ist.

10. Transportvorrichtung nach einem der Ansprüche 1 bis 9, **dadurch gekennzeichnet, daß** das Rahmengehäuse (11) in seiner fahrzeugseitigen Halterung leicht lösbar befestigt ist.

## Claims

1. A transport device (10), for example for passenger cars or estate cars, having a frame housing (11) which is arranged in a vehicle-side holding device (34, 35) and forms a container storage area (S) for a foldable container (30), particularly a bag-like container, which is intended especially for a long load, for example skis, and intended especially for a long load, for example skis, and can be reduced in size to a container storage volume and fixed within the frame housing (11), a cover (25) being associated with at least one opening face (13) of the frame housing (11) which is approximately parallel to the principal plane of extent of the frame housing (11), **characterised in that** the frame housing (11) is provided with an additional housing (12) on at least one side (F) of its vehicle-side holding device (34, 35), which additional housing is connected to the opening face (13) of the frame housing (11) and at the same time forms the cover (25) or assumes the function of the cover.

2. A transport device according to Claim 1, **characterised in that** the additional-housing interior (Z) adjoins the container storage area (S) of the frame housing (11).

3. A transport device according to Claim 1 or according to Claim 2, **characterised in that** the additional housing (12) forms the cover (25) at a spacing from the plane (E) of the adjacent opening face (13) of the frame housing (12).

4. A transport device according to one of Claims 1 to 3, **characterised in that** the additional housing (12) is mounted on the frame housing (11), forming a unit with the frame housing (11).

5. A transport device according to one of Claims 1 to 4, **characterised in that** the additional housing (12) is releasably mounted on the frame housing (11).

6. A transport device according to one of Claims 1 to 4, **characterised in that** the additional housing (12) is mounted on the frame housing (11) with material fit.

7. A transport device according to one of Claims 1 to 6, **characterised in that** the container storage area (S) and the additional-housing interior (Z) can be separated from one another by means of a releasably held one-piece or multi-piece dividing element (15).

8. A transport device according to one of Claims 1 to 7, **characterised in that** the frame housing (11) forms a fixedly connected wall at an approximately parallel spacing from the plane (E) of an opening face (13) on its side facing away from the additional housing (12).

9. A transport device according to one of Claims 1 to 8, **characterised in that** the cover (25) formed by the additional housing (12) is provided with a lock (39).

10. A transport device according to one of Claims 1 to 9, **characterised in that** the frame housing (11) is mounted in its vehicle-side holding device such that it is easily releasable.

## Revendications

1. Dispositif de transport (10), tel que, par exemple, pour des voitures particuliers ou breaks, avec un boîtier de cadre (11) , disposé dans une fixation (34, 35) située côté véhicule, boîtier de cadre formant un espace de rangement de récipient (S), pour un récipient (30) pouvant être réduit de volume, en particulier du genre d'un sac, susceptible d'être fixé à l'intérieur du boîtier de cadre (11), repliable, récipient (30) prévu pour un produit à charger dont on présume qu'il est long, tel que par exemple pour des skis, sachant que, au moins à une surface d'ouverture (13), à peu près parallèle au plan d'étendue principale du boîtier de cadre (11) est associé un couvercle (25), **caractérisé en ce que** le boîtier de cadre (11) est muni, au moins sur une de ses faces (en F), de sa fixation (34, 35) située côté véhicule d'un boîtier additionnel (12), raccordé à la surface d'ouverture (13) du boîtier de cadre (11) et formant en même temps le couvercle (25) ou bien jouant le rôle du couvercle.

2. Dispositif de transport selon la revendication 1, **caractérisé en ce que** l'espace intérieur (Z) du boîtier additionnel se raccorde à l'espace de rangement de récipient (S) du boîtier de cadre (11).

3. Dispositif de transport selon la revendication 1 ou selon la revendication 2, **caractérisé en ce que** le boîtier additionnel (12) forme, à distance du plan (E) de la face d'ouverture (13) voisine du boîtier de cadre (12), le couvercle (25).

4. Dispositif de transport selon l'une des revendications 1 à 3, **caractérisé en ce que** le boîtier additionnel (12), formant un ensemble de construction avec le boîtier de cadre (11), est fixé sur le boîtier de cadre (11).

5. Dispositif de transport selon l'une des revendications 1 à 4, **caractérisé en ce que** le boîtier additionnel (12) est fixé de façon désolidarisable sur le boîtier de cadre (11).

6. Dispositif de transport selon l'une des revendications 1 à 4, **caractérisé en ce que** le boîtier additionnel (12) est fixé sur le boîtier de cadre (11) par une liaison par la matière.

7. Dispositif de transport selon l'une des revendications 1 à 6, **caractérisé en ce que** l'espace de rangement de récipient (S) et l'espace intérieur (Z) du boîtier additionnel peuvent être séparés l'un de l'autre au moyen d'un élément de séparation (15), réalisé en une ou plusieurs parties maintenues de façon désolidarisable.

8. Dispositif de transport selon l'une des revendications 1 à 7, **caractérisé en ce que** le boîtier de cadre (11) forme, à peu près sous un espacement parallèle vis-à-vis du plan (E) d'une surface d'ouverture (13), sur sa face opposée au boîtier additionnel (12), une paroi raccordée à demeure.

9. Dispositif de transport selon l'une des revendications 1 à 8, **caractérisé en ce que** le couvercle (25) formé par le boîtier additionnel (12) est muni d'une serrure (39).

10. Dispositif de transport selon l'une des revendications 1 à 9, **caractérisé en ce que** le boîtier de cadre (11) est fixé de façon facilement désolidarisable dans sa fixation située côté véhicule.
